# EUROPEAN PATENT SPECIFICATION

(11) **EP 1 257 984 B1**
(45) Date of publication and mention of the grant of the patent: **28.04.2004**
(21) Application number: 01906114.2
(22) Date of filing: 07.02.2001
(51) Int. Cl.: G07G 1/14

(54) **A METHOD, SYSTEM AND DEVICE FOR REMOTE COMMERCIAL TRANSACTIONS**
VERFAHREN, SYSTEM UND VORRICHTUNG FÜR ENTFERNTE GESCHÄFTLICHE TRANSAKTIONEN
PROCEDE, SYSTEME ET DISPOSITIF DESTINE A DES TRANSACTIONS COMMERCIALES A DISTANCE

(30) Priority: 07.02.2000 IT PD000037
(43) Date of publication of application: 20.11.2002
(73) Proprietor: Cardtech S.r.l., 35129 Padova (IT)
(72) Inventor: Balagion, Renzo, 35027 Noventa Padovana (IT); Altavilla, Claudio, 35129 Padova (IT)
(74) Representative: Fabris, Stefano (IT)
(86) International application number: PCT/IT2001/000054
(87) International publication number: WO 2001/057818

(56) References cited:
- EP-A- 0 484 198
- EP-A- 0 930 590
- EP-A- 0 940 783
- WO-A-96/26505
- WO-A-98/44462
- DE-A- 19 638 251
- US-A- 5 208 446

## Description

### Technical field

The present invention relates to a method, a system and a device for effecting remote commercial transactions.

### Technological background

Systems of payment by means of devices for financial-commercial transactions, such as POS terminals, ATM cash terminals and the like, have become very widespread in recent years. This spread is amply justified by the substantial practicality with which transactions can be carried out without requiring the physical exchange of money between the individual acquiring goods or services and the cashier of the commercial business where those goods or services are acquired.

POS terminals are provided with a fixed portion, equipped with a printer, a keyboard and a display, for entering the financial transaction and for reading the means of payment proposed by the user, whether this be a credit card or another similar instrument, and a mobile portion by means of which the user can key in relevant confirmation codes in order to enable the transaction to be carried out. The fixed portion is in turn connected by telephone cable to the host system of the institution managing the financial transaction.

However, those payment systems have some disadvantages which result from the fact that they require a fixed physical connection between the portion managed by the user, that managed by the retailer and the host who presides over and records the transaction. That connection is both electrical, for the power supply, and telephonic, for connection to the authorization centre.

A portable wireless payement terminal for restaurant and shop use is known from EP-A-484 198.

Dedicated recognition systems are also known in which user recognition operations, which may be preparatory to subsequent financial transactions, are managed using wireless methods. Typically this is what happens in motorway network automatic recognition systems, which are known in Italy as the "Telepass" system. However, in that case the transaction is not of a financial type but one of pure recognition. The user, the time and the transit station, both on entering and on leaving, are recognised in order to communicate all of these data to a management system which only later calculates and charges a toll in deferred manner. The management system, the type of transaction, the methods and the means of payment are unambiguously determined a priori and outside the contingent control of the user.

All of these operating limits typical of the known systems substantially restrict the field of application of these devices.

### Disclosure of the invention

The object of the invention is to provide a method, a system and a device for remote commercial and financial transactions, designed structurally and functionally to avoid all of the disadvantages discussed with reference to the mentioned prior art.

The object is achieved by the invention by means of a method, a system and a device produced in accordance with the claims which follow.

### Brief description of the drawings

The characteristics and advantages of the invention will become clearer from the detailed description of a preferred embodiment thereof which is illustrated, by way of nonlimiting example, with reference to the appended drawings in which:
- Figure 1 is a perspective diagrammatic view of a device for remote financial transactions;
- Figure 2 is a logic circuit diagram of the device of Figure 1;
- Figure 3 is a schematic diagram of a system for remote financial transactions in one of its possible configurations.

### Best mode for carrying out the invention

In the drawings, 1 generally indicates a device for remote financial transactions which is produced in accordance with the present invention. The device 1, in one of its typical configurations, cooperates operatively with a fixed transceiver station which is indicated 2 in the diagram and which is in turn connected to a fixed terminal 3.

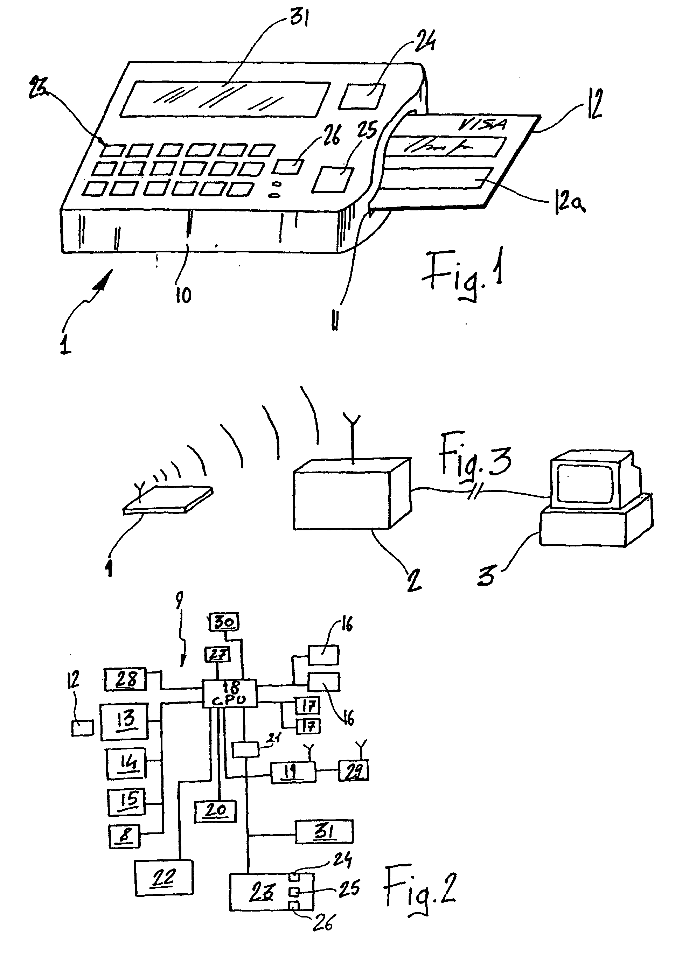

The device of Figure 1 is part of the invention only to the extent that it includes resident (non removable) payment means as it will be better clarified hereafter.

The terminal 3 comprises a stand-alone or virtual terminal known *per se* and is to collect the data received from the transceiver station 2, preferably in encrypted form, in order to decode them in the language of the proprietary information system of the service and to transmit them by cable in de-encrypted form to the management information system of the service. The latter is preferably interfaced with the bank hosts or hosts of financial institutions, which provide the transaction service, for the transmission in real time of the received data. It is, however, provided that it permits off-line transmission for back-up purposes.

The transceiver station 2 comprises a transceiver apparatus of low capacity, generally less than 10 mW, with ranges which can vary from 30 to 100 metres, up to a maximum of 5-6 km depending on the electromagnetic characteristics of the operating area and any obstacles interposed between the transmitter and the receiver. Typically, these apparatuses operate in the 433.1 - 434.7 MHz band.

The device 1 comprises a box-form body 10 which has an approximately rectangular plan and which is provided, on one of its short sides, with a slot 11 for the insertion of a card or badge 12, for example of the type having a magnetic strip 12a. Arranged inside the body 10 is a motherboard 9, the electronic circuit of which comprises one or more eprom flash memories 8 capable of containing and permitting the reading of corresponding virtual credit cards or only data stored in a different manner on the magnetic strip of a typical conventional credit card. The circuit of the motherboard 9 also comprises one or more ROM memories 16 and one or more RAM memories 17 as well as a processor 18 for the integrated management of the above-mentioned componentry. The same circuit comprises a transceiver apparatus 19, a watchdog circuit 20, a module 21 for encrypting data, a battery supply 22, an alphanumeric keyboard 23, function keys 24, 25 and 26, an acoustic indicator 27, such as a monotone buzzer, a GPS receiver module 28, an interface module 29 for GSM transceivers and an RS 232 serial interface module 30, and also a display 31. Likewise, the reading means permit the reading of data stored on eprom flash 8 acting as a virtual credit card. The above-mentioned data are indicated in the claims which follow as "data preparatory to the financial transaction". These data may also comprise data emitted by means of the keyboard 23 and/or the function keys 24-26. The above-mentioned data can be stored at least temporarily in the memory 17 or can be processed directly by the processor 18 in order to be encrypted by the module 21 and sent, by means of the transceiver apparatus 19, to the fixed transceiver station 2, which is in turn interfaced with the fixed terminal 3. The amount of the transaction is picked up by the fixed transceiver station 2, assisted by the terminal 3, and transmitted to the device 1. The user, after any communication of the amount of the financial transaction in progress, will be asked to confirm the transaction by pressing, for example, the function key 24. In other cases, the user must first of all enter data which enable the amount of the transaction to be determined, for example the length of time required in a car park, for which the issuing of a confirmation ticket is required for display in the parked vehicle, and he must then press the key 24 to confirm the transaction.

In that configuration, the device is suitable for admission to protected areas and for tele-payment of the service offered (for example, a parking service), and for the tele-payment of motorway tolls and of fuel at service stations.

In addition, the device 1 can be used to communicate in "proximity" mode (or as a typical proximity card, such as those used in ski lift equipment) while using as the means of payment any of the means available, for example a traditional credit card 12 having a magnetic strip. This situation is provided for when payment for services is made to equipment provided with POS terminals having "proximity" readers, such as in ticket dispensers for parking meters or POS terminals installed in various commercial businesses.

Finally, it is provided that the RAM memory is associated with the function keys 24-26 so that, by pressing simultaneously on the key 26 and one or other of the keys 24, 25, access is obtained to two respective memory areas which, for example, store and consequently display on the display 31 the data relating to the last (ten) payments made and/or typical diary data and, respectively, data relating to the user's car, such as the year of registration and the registration number, the date of expiry of the insurance stamp, servicing tickets, etc.. By programming the relevant expiry dates, the user is warned of them by means of the buzzer-type acoustic indicator 27.

The invention thus achieves the object proposed and permits numerous other advantages, such as the diary and expiry date monitoring service, the monitoring of payments carried out, the optional support of telecommunications by means of the GSM module associated therewith, the optional support of satellite navigation systems by means of the GPS module and the GSM module acting as a support thereof, and also the monitoring of data relating, for example, to one's car, such as the registration number, the year of registration, the expiry dates of policies and tickets, etc..

## Claims

1. A method for remote commercial and financial transactions, including the stage of wireless transmission of data preparatory to the financial transaction between a personal remote device (1) containing a resident payment means (12) and a fixed payment terminal (3), the data including data identifying the means of payment used and data of voluntary confirmation of the transaction.

2. A method according to claim 1, wherein the data are transmitted in encrypted form.

3. A personal device for remote commercial and financial transactions comprising a box-form body (10), a motherboard (9) in said body having an electronic circuit including:
- reading means (13, 14, 15) for reading a payment means (12) resident in the box-form body,
- data-input means (23, 24, 25, 26), including means for the voluntary confirmation of the transaction,
- a processor (18) associated with the reading means (13, 14, 15) and the input means (23, 24, 25, 26) for processing data entered by means of the input means (23, 24, 25, 26) and/or data read by the reading means (13, 14, 15), and preparatory to the financial transaction,
- transceiver means (19) for transmitting the data to a remote station (2) of a payment terminal (3) in real time and with a wireless connection.

4. A device according to claim 3, wherein the data-input means comprise a receiving station (19, 29).

5. A device according to claim 4, wherein the receiving station (29) belongs to the transceiver means (19).

6. A device according to one or more of claims 3 to 5, wherein the input means comprise a keyboard (23).

7. A device according to one or more of claims 3 to 6, wherein the electronic circuit comprises cryptographic means (21) for encrypting the data transmitted by the transceiver means (19).

8. A device according to one or more of claims 3 to 8, wherein the reading means (13, 14, 15) are provided for the recognition of non-volatile memory circuits resident in the box-form body (10).

9. A device according to one or more of claims 3 to 9, wherein the electronic circuit comprises memory means (8, 16, 17) for storing the data preparatory to the transaction and/or one or more data bases extraneous to the transaction.

10. A system for remote commercial and financial transactions, including at least one device according to one or more of claims 3 to 10, capable of remote connection in wireless mode to a fixed transceiver station (2) which is in turn connected to a management information system of the service (3)

## Patentansprüche

1. Verfahren für ferngesteuerte Geschäfts- und Finanztransaktionen, das die drahtlose Übertragungsphase von Daten umfasst, die im Hinblick auf die Finanztransaktion zwischen einem individuellen, rechnerfernen Datenverarbeitungsgerät, das ein speicheresidentes Zahlungsmittel (12) enthält, und einem standortfixierten Zahlungsverkehrsterminal (3) aufbereitet werden, wobei die Daten die Datenidentifizierung des verwendeten Zahlungsmittels und die Daten der wahlweisen Bestätigung der Transaktion beinhalten.

2. Verfahren nach Anspruch 1, wobei die Daten in verschlüsselter Form übertragen werden.

3. Individuelles Datenverarbeitungsgerät für ferngesteuerte Geschäfts- und Finanztransaktionen mit einem gehäuseförmigen Körper (10), das eine Systemplatine (9) in dem Körper mit einem elektronischen Schaltkreis aufweist, welcher umfasst:
- Lesevorrichtungen (13, 14, 15) für das Lesen eines Zahlungsmittels (12), das in dem gehäuseförmigen Körper speicherresident ist;
- Dateneingabevorrichtungen (23, 24, 25, 26), die Mittel für das wahlweise Bestätigen der Transaktion enthalten;
- einen Prozessor (18), der mit den Lesevorrichtungen (13, 14, 15) und den Dateneingabevorrichtungen (23, 24, 25, 26) für das Verarbeiten der Daten verbunden ist, die mittels der Eingabevorrichtungen (23, 24, 25, 26) eingegeben worden sind und/oder der Daten, die von den Lesevorrichtungen (13, 14, 15) gelesen und im Hinblick auf die Finanztransaktion vorbereitet worden sind;
- Übertragungseinrichtung (19) für das Übertragen der Daten an eine entfernte Sende-/Empfangsstation (2) eines Zahlungsverkehrsterminals (3) in Echtzeit und mit einer drahtlosen Verbindung.

4. Datenverarbeitungsgerät nach Anspruch 3, worin die Dateneingabevorrichtungen eine Empfangsstation (19, 29) umfassen.

5. Datenverarbeitungsgerät nach Anspruch 4, worin die Empfangsstation (29) zur Übertragungseinrichtung (19) gehört.

6. Datenverarbeitungsgerät nach einem oder mehreren der Ansprüche 3 bis 5, worin die Dateneingabevorrichtungen ein Tastenfeld (23) umfassen.

7. Datenverarbeitungsgerät nach einem oder mehreren der Ansprüche 3 bis 6, worin der elektronische Schaltkreis eine Geheimcodiervorrichtung (21) für das Verschlüsseln der Daten umfasst, die von der Übertragungseinrichtung (19) übertragen werden.

8. Datenverarbeitungsgerät nach einem oder mehreren der Ansprüche 3 bis 7, worin die Lesevorrichtungen (13, 14, 15) für das Erkennen von nichtflüchtigen Speicherschaltkreisen vorgesehen sind, die in dem gehäuseförmigen Körper (10) resident sind.

9. Datenverarbeitungsgerät nach einem oder mehreren der Ansprüche 3 bis 8, worin der elektronische Schaltkreis Speichereinrichtungen (8, 16, 17) für das Speichern der Daten umfasst, die für die Transaktion vorbereitet werden, und/oder eine oder mehrere Datenbanken, die von außen auf die Transaktion einwirken können.

10. System für ferngesteuerte Geschäfts- und Finanztransaktionen, das mindestens ein Gerät gemäß einem oder mehreren der Ansprüche 3 bis 9 umfasst, und das eine Fernverbindung zu einer standortfixierten Sende-/Empfangsstation (2) in einem drahtlosen Betriebsmodus herstellen kann, welche wiederum mit einem Managementinformationssystem der Dienstleistungsgesellschaft (3) verbunden ist.

## Revendications

1. Procédé destiné à des transactions commerciales et financières à distance, comprenant l'étape de transmission sans fil de données en préparation à la transaction financière entre un dispositif personnel à distance (1) contenant des moyens de paiement résident (12) et un terminal de paiement fixe (3), les données comprenant des- données identifiant les moyens de paiement utilisés et des données de confirmation volontaire de la transaction.

2. Procédé selon la revendication 1, dans lequel les données sont transmises sous forme chiffrée.

3. Dispositif personnel destiné à des transactions commerciales et financières à distance comprenant un corps en forme de boîte (10), une carte mère (9) dans ledit corps comportant un circuit électronique comprenant :
- des moyens de lecture (13, 14, 15) pour lire des moyens de paiement (12) résidant dans le corps en forme de boîte,
- des moyens d'entrée de données (23, 24, 25, 26) comprenant des moyens pour la confirmation volontaire de la transaction,
- un processeur (18) associé aux moyens de lecture (13, 14, 15) et aux moyens d'entrée (23, 24, 25, 26) pour traiter des données entrées à l'aide des moyens d'entrée (23, 24, 25, 26) et/ou des données lues par les moyens de lecture (13, 14, 15) et en préparation à la transaction financière,
- des moyens formant émetteur-récepteur (19) pour transmettre les données à une station à distance (2) d'un terminal de paiement (3) en temps réel et par une connexion sans fil.

4. Dispositif selon la revendication 3, dans lequel les moyens d'entrée de données comprennent une station de réception (19, 29).

5. Dispositif selon la revendication 4, dans lequel la station de réception (29) appartient aux moyens formant émetteur-récepteur (19).

6. Dispositif selon une ou plusieurs des revendications 3 à 5, dans lequel les moyens d'entrée comprennent un clavier (23).

7. Dispositif selon une ou plusieurs des revendications 3 à 6, dans lequel le circuit électronique comprend des moyens cryptographiques (21) pour chiffrer les données transmises par les moyens formant émetteur-récepteur (19).

8. Dispositif selon une ou plusieurs des revendications 3 à 8, dans lequel les moyens de lecture (13, 14, 15) sont prévus pour la reconnaissance de circuits de mémoire non volatile résidant dans le corps en forme de boîte (10).

9. Dispositif selon une ou plusieurs des revendications 3 à 9, dans lequel le circuit électronique comprend des moyens formant mémoire (8, 16, 17) pour mémoriser les données en préparation à la transaction et/ou une ou plusieurs bases de données sans rapport avec la transaction.

10. Système destiné à des transactions commerciales et financières à distance, comprenant au moins un dispositif selon une ou plusieurs des revendications 3 à 10, capable d'effectuer une connexion à distance dans un mode sans fil avec une station émettrice-réceptrice fixe (2) qui est à son tour connectée à un système d'informations de gestion du service (3).
